(19) Europäisches Patentamt
European Patent Office
Office européen des brevets

(11) Veröffentlichungsnummer : **0 134 192**
**B1**

# (12) EUROPÄISCHE PATENTSCHRIFT

(45) Veröffentlichungstag der Patentschrift : **30.09.87**

(51) Int. Cl.[4] : **C 09 B 62/08**, C 09 B 62/507, D 06 P 3/66

(21) Anmeldenummer : **84810358.6**

(22) Anmeldetag : **23.07.84**

(54) **Reaktivfarbstoffe, deren Herstellung und Verwendung.**

(30) Priorität : **29.07.83 CH 4169/83**

(43) Veröffentlichungstag der Anmeldung : **13.03.85 Patentblatt 85/11**

(45) Bekanntmachung des Hinweises auf die Patenterteilung : **30.09.87 Patentblatt 87/40**

(84) Benannte Vertragsstaaten : **CH DE FR GB IT LI**

(56) Entgegenhaltungen : **EP-A- 0 031 099**

(73) Patentinhaber : **CIBA-GEIGY AG**
**Klybeckstrasse 141**
**CH-4002 Basel (CH)**

(72) Erfinder : **Tzikas, Athanassios, Dr.**
**Muttenzerstrasse 78**
**CH-4133 Pratteln (CH)**
Erfinder : **Meyer, Hans Rudof, Dr.**
**Bollwerkstrasse 102**
**CH-4102 Binningen (CH)**

**EP 0 134 192 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die vorliegende Erfindung betrifft neue Reaktivfarbstoffe, Verfahren zu deren Herstellung und deren Verwendung zum Färben oder Bedrucken von Fasermaterialien.

Die Praxis des Färbens mit Reaktivfarbstoffen hat in neuerer Zeit zu erhöhten Anforderungen an die Qualität der Färbungen und die Wirtschaftlichkeit des Färbeprozesses geführt. Infolge dessen besteht weiterhin ein Bedarf nach neuen Reaktivfarbstoffen, welche verbesserte Eigenschaften, insbesondere in bezug auf die Applikation aufweisen.

Für das Färben von Baumwolle nach dem Kaltverweilverfahren werden heute Reaktivfarbstoffe gefordert, die eine ausreichende, der niedrigen Färbetemperatur angepasste Substantivität haben, und die zugleich eine gute Auswaschbarkeit der nicht fixierten Anteile aufweisen. Sie sollen ferner eine hohe Reaktivität besitzen, so dass nur kurze Verweilzeiten erforderlich sind, und sie sollen insbesondere Färbungen mit hohen Fixiergraden liefern. Von bekannten Farbstoffen werden diese Anforderungen nur in ungenügendem Masse erfüllt.

Der vorliegenden Erfindung lag daher die Aufgabe zugrunde, neue, verbesserte Reaktivfarbstoffe für das Kaltverweilverfahren zu finden, welche die oben charakterisierten Qualitäten in hohem Masse besitzen. Die neuen Farbstoffe sollten sich vor allem durch hohe Fixierausbeuten und hohe Faser-Farbstoff-Bindungsstabilitäten auszeichnen, und ausserdem sollten die nicht auf der Faser fixierten Anteile leicht auswaschbar sein. Sie sollten ferner Färbungen mit guten Allgemeinechtheiten, beispielsweise Licht- und Nassechtheiten, ergeben.

Es hat sich gezeigt, dass mit den weiter unten definierten neuen reaktiven Farbstoffen die gestellte Aufgabe gelöst wird.

Gegenstand der Erfindung sind Reaktivfarbstoffe der Formel

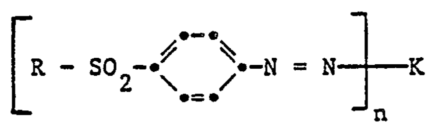

(1)

worin R ein Rest $-CH=CH-CH_3$ oder $-CH_2-CH=CH_2$, K der Rest einer Kupplungskomponente der Benzol- oder Naphthalinreihe oder der heterocyclischen Reihe, der durch Alkylgruppen mit 1 bis 4 Kohlenstoffatomen, β-Aminoäthyl, γ-Aminopropyl, Alkoxygruppen mit 1 bis 4 Kohlenstoffatomen, Acylaminogruppen mit 1 bis 8 Kohlenstoffatomen, Aminobenzoylamino, Nitrobenzoylamino, Amino, Alkylamino mit 1 bis 4 Kohlenstoffatomen, N,N-Diäthylamino, Phenylamino, Amino-sulfophenylamino, β-Hydroxyäthylamino, N,N-Di-(β-hydroxyäthyl)-amino, N,N-Di(β-sulfatoäthyl)-amino, N-Acetyl-N-methylamino, Hydroxyacetylamino, Sulfobenzylamino, N,N-Di-sulfobenzylamino, Phenyl, Phenoxy, Alkoxycarbonyl mit 1 bis 4 Kohlenstoffatomen im Alkoxyrest, Alkylsulfonyl mit 1 bis 4 Kohlenstoffatomen, Phenylsulfonyloxy, Trifluormethyl, Nitro, Cyano, Halogen, Carbamoyl, N-Alkylcarbamoyl mit 1 bis 4 Kohlenstoffatomen im Alkylrest, Sulfamoyl, N-Alkylsulfamoyl mit 1 bis 4 Kohlenstoffatomen, N-(β-Chloräthyl)-sulfamoyl, N-(β-Hydroxyäthyl)-sulfamoyl, N,N-Di-(β-hydroxyäthyl)-sulfamoyl, N-Phenylsulfamoyl, Ureido, Hydroxy, Carboxy, Sulfomethyl oder Sulfo substituiert sein kann ; und n = 1 oder 2 ist.

Der Rest K kann selbst wiederum Azogruppen enthalten, er kann also der Rest einer Azoverbindung, insbesondere einer Monoazoverbindung, sein. Sofern K der Rest einer Kupplungskomponente der Benzol- oder Naphthalinreihe ist, stellt K somit vorzugsweise einen Benzol-, Naphthalin-, Azobenzol-, Naphthylazobenzol-, Azonaphthalin- oder Phenylazonaphthalin- Rest dar, der wie unten angegeben, weitersubstituiert sein kann ; dabei ist vorzugsweise n = 1. Falls n = 2 ist, muss K der Rest einer zweifach ankuppelbaren Komponente sein, oder eine solche enthalten. Als zweifach ankuppelbare Komponenten kommen insbesondere diejenigen der Aminonaphtholsulfonsäurereihe in Betracht, die weiter unten genannt sind. Sofern K der Rest einer Kupplungskomponente der heterocyclischen Reihe ist, kommt ein Pyrazolon- oder Pyridonrest oder der Rest einer der weiter unten genannten heterocyclischen Kupplungskomponenten in Betracht. Auch in diesem Falle kann der Rest K weitere Azogruppen enthalten, z. B. wenn K als Phenylazopyrazolonrest vorliegt.

Als Beispiele für weitere Substituenten im Rest K seien genannt Methyl, Aethyl, Propyl, Isopropyl, Butyl, Methoxy, Aethoxy, Propoxy, Isopropoxy, Butoxy, Acetylamino, Propionylamino, Benzoylamino, Amino, Methylamino, Aethylamino, Propylamino, Isopropylamino, Butylamino, Phenylamino, N,N-Di-β-hydroxyäthylamino, N,N-Di-β-sulfatoäthylamino, Sulfobenzylamino, N,N-Disulfobenzylamino, Methoxycarbonyl, Aethoxycarbonyl, Methylsulfonyl, Aethylsulfonyl, Trifluormethyl, Nitro, Cyano, Fluor, Chlor, Brom, Carbamoyl, N-Methylcarbamoyl, N-Aethylcarbamoyl, Sulfamoyl, N-Methylsulfamoyl, N-Aethylsulfamoyl, N-Propylsulfamoyl, N-Isopropylsulfamoyl, N-Butylsulfamoyl, N-(β-hydroxyäthyl)-sulfamoyl, N,N-Di-(β-hydroxyäthyl)-sulfamoyl, N-Phenylsulfamoyl, Ureido, Hydroxy, Carboxy, Sulfomethyl und Sulfo. Vorzugsweise enthält der Rest K eine oder mehrere Sulfonsäuregruppen. Weitere Substituenten sind vor allem Methyl, Aethyl, Methoxy, Aethoxy, Acetylamino, Benzoylamino, Amino, Chlor, Brom, Ureido, Hydroxy, Carboxy, Sulfomethyl oder Sulfo.

Als Reaktivfarbstoffe der Formel (1) sind Mono- und Disazofarbstoffe bevorzugt.

Bevorzugt sind Reaktivfarbstoffe der Formel

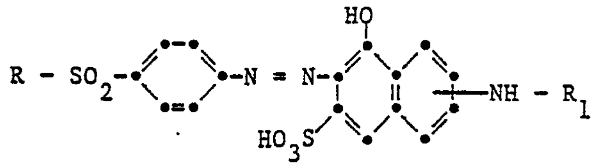

(2)

worin $R_1$ Wasserstoff, $C_{1-4}$-Alkyl oder $C_{1-4}$-Alkanoyl ist, und R die unter Formel (1) angegebene Bedeutung hat ;

Reaktivfarbstoffe der Formel (2), worin $R_1$ Acetyl ist ;

Reaktivfarbstoffe der Formel

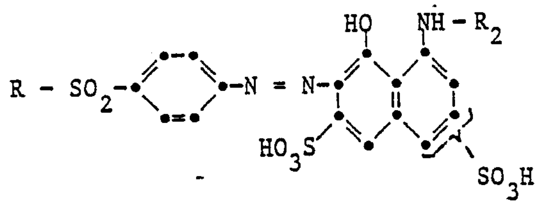

(3)

worin $R_2$ Wasserstoff, $C_{1-4}$-Alkanoyl oder Benzoyl ist, und R die unter Formel (1) angegebene Bedeutung hat ;

Reaktivfarbstoffe der Formel (3), worin $R_2$ Benzoyl ist ;

Reaktivfarbstoffe der Formel

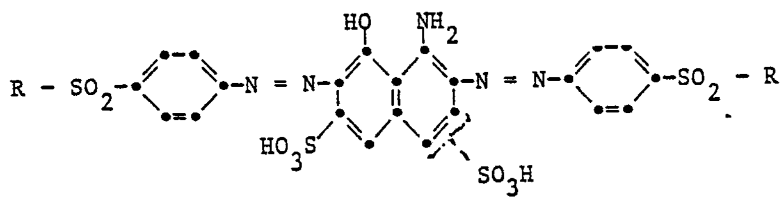

(4)

worin R die unter Formel (1) angegebene Bedeutung hat ;
und Reaktivfarbstoffe der Formel

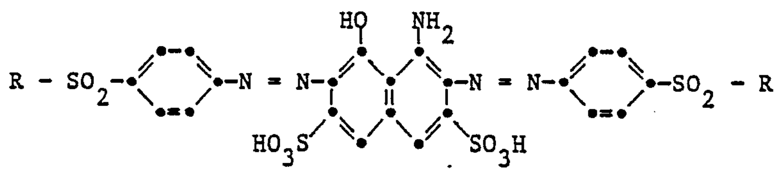

(5)

worin R die unter Formel (1) angegebene Bedeutung hat.

Ausser den oben beschriebenen Reaktivfarbstoffen der Formeln (2) bis (5) sind als weitere wertvolle Vertreter die Reaktivfarbstoffe der folgenden Formeln zu nennen :

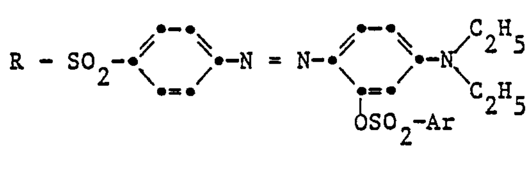

(8)

Ar : Aryl, z. B. Phenyl.

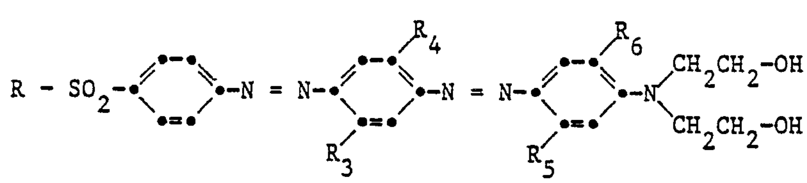

(9)

$R_3$ bis $R_6$ : H, $C_{1-4}$-Alkyl, $C_{1-4}$-Alkoxy, Halogen, Acetylamino, Ureido.

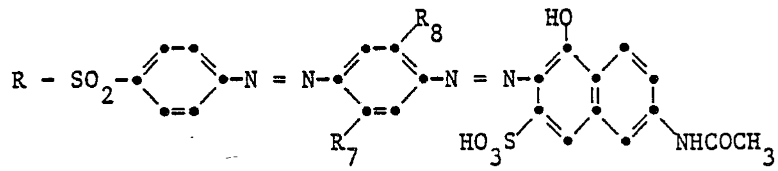

(10)

$R_7$, $R_8$ : H, $C_{1-4}$-Alkyl, $C_{1-4}$-Alkoxy, Halogen, Acetylamino, Ureido.

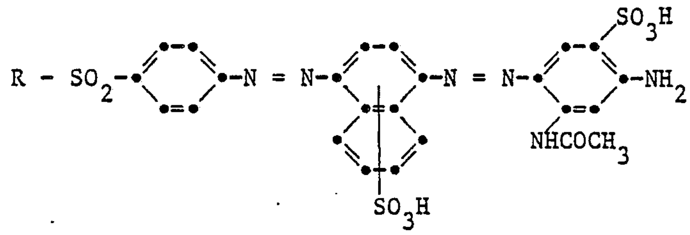

(11)

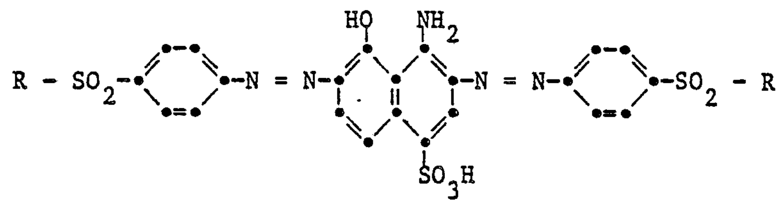

(12)

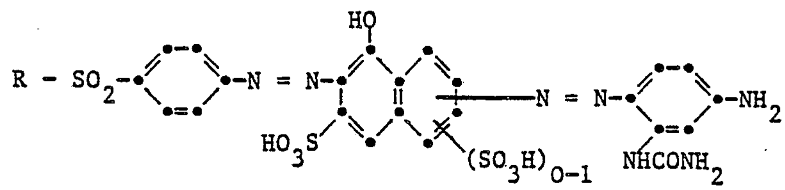

(13),

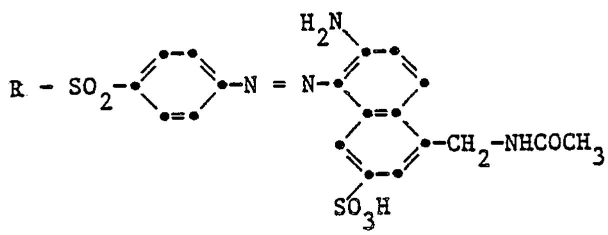

(14),

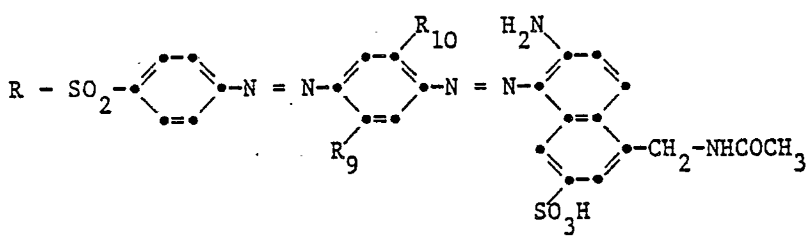

(15),

$R_9$, $R_{10}$ : H, $C_{1-4}$-Alkyl, $C_{1-4}$-Alkoxy, Halogen, Acetylamino, Ureido.

(Siehe Formeln Seite 5 ff.)

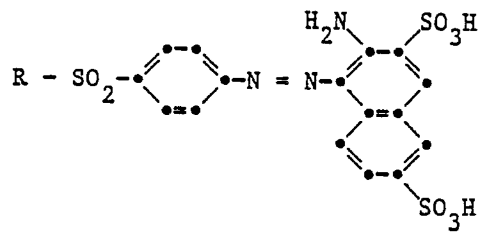

(16),

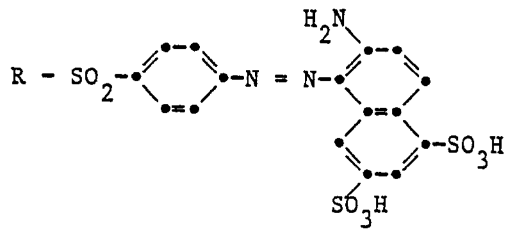

(17),

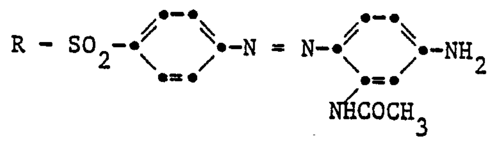

(18),

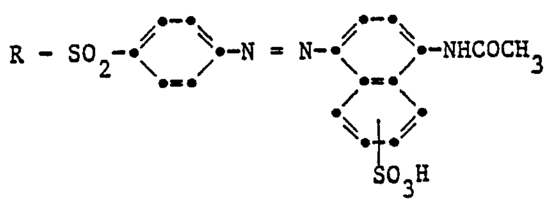

(19) ,

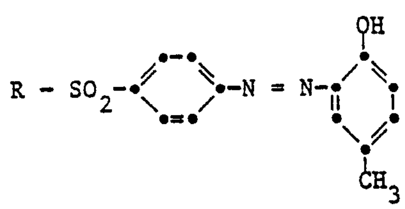

(20) ,

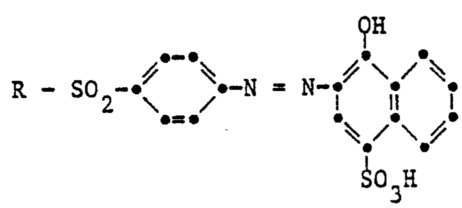

(21) ,

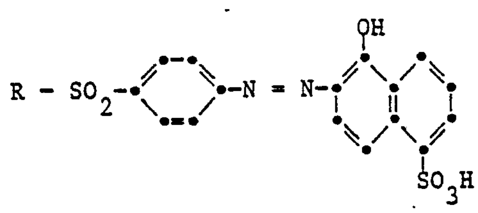

(22) ,

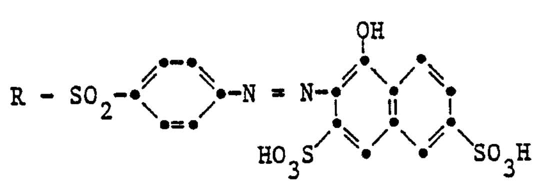

(23) ,

(Fortsetzung)

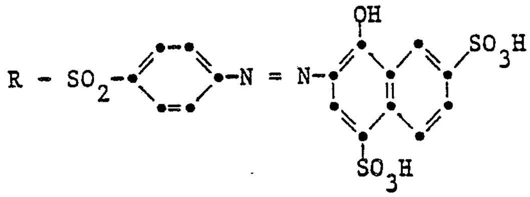

(24) ,

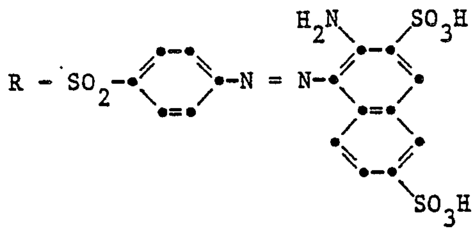

(25) ,

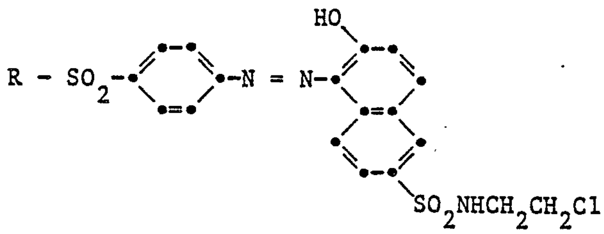

(26) ,

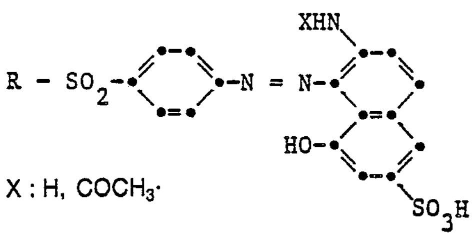

(27) ,

X : H, $COCH_3$·

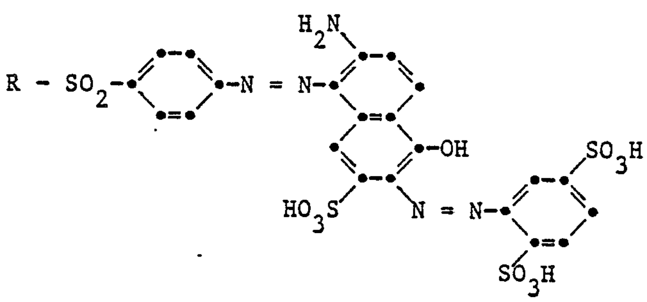

(28) ,

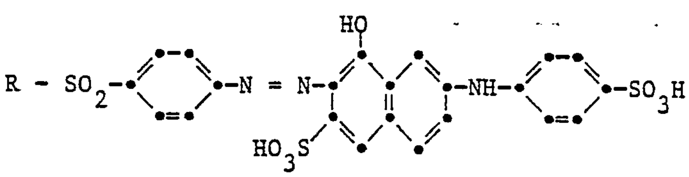

(29) ,

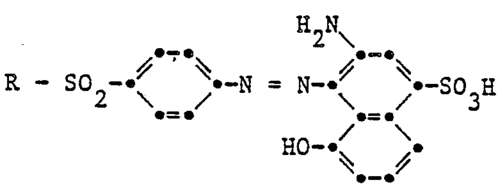

(30) ,

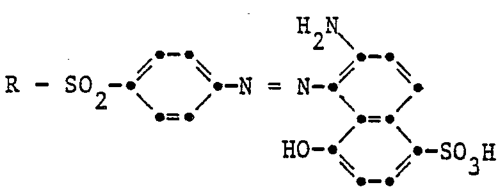

(31) ,

(Fortsetzung)

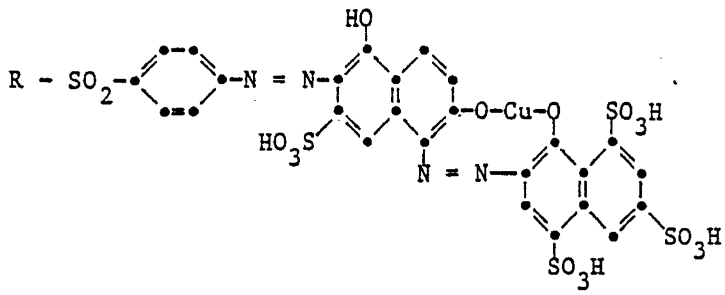

(32) ,

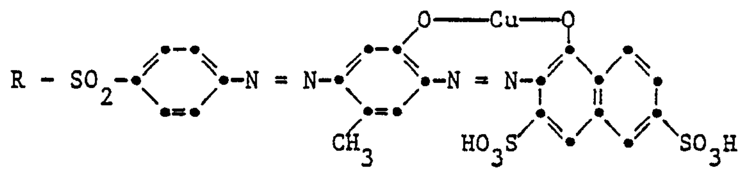

(33) ,

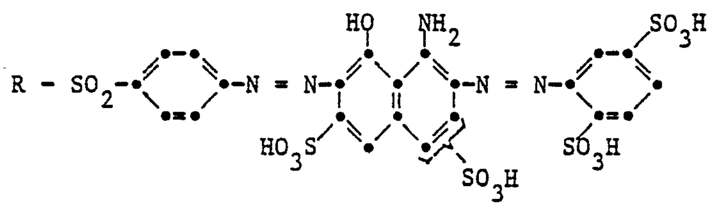

(34) ,

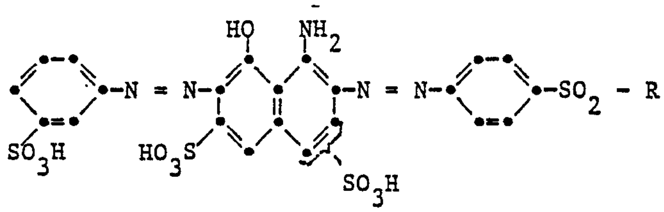

(35) ,

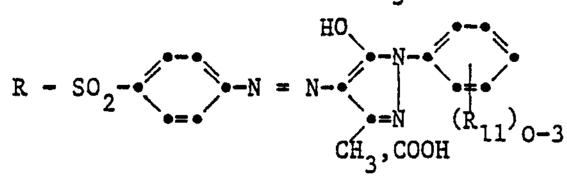

(36) ,

$R_{11}$ : $C_{1-4}$-Alkyl, $C_{1-4}$-Alkoxy, Halogen, Carboxy, Sulfo.

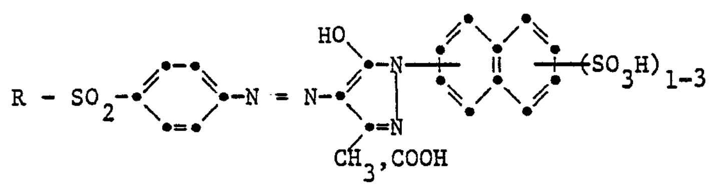

(37) ,

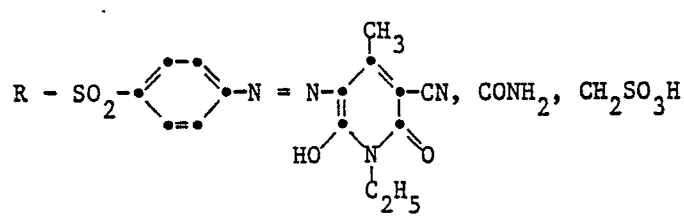

(38) .

In den Formeln (8) bis (38) sind die Reste $R_3$, $R_4$, ... etc., die zu ein und derselben Formel gehören, voneinander unabhängig, und R hat die unter Formel (1) angegebene Bedeutung. Vorzugsweise bedeuten die Reste $R_3$ bis $R_{10}$ Wasserstoff, Methyl, Aethyl, Methoxy, Aethoxy, Acetylamino, Ureido oder Chlor. Der Rest $R_{11}$ ist vorzugsweise Methyl, Methoxy, Chlor oder Sulfo.

Das Verfahren zur Herstellung der Reaktivfarbstoffe der Formel (1) ist dadurch gekennzeichnet, dass man Diazokomponenten der Formel

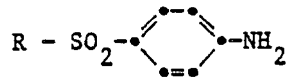

(6)

und Kupplungskomponenten der Formel

H—K (7)

durch Diazotierung und Kupplung im gewünschten molaren Verhältnis zu Reaktivfarbstoffen der Formel (1) umsetzt.

Gegebenenfalls verwendet man statt einer Kupplungskomponente der Formel (7) ein Vorprodukt und stellt den Endfarbstoff durch eine weitere Kupplung bzw. weitere Kupplungen oder sonstige Umwandlungsreaktionen mit dem Zwischenprodukt fertig.

Liegen in den hergestellten Reaktivfarbstoffen zur Metallkomplexbildung befähigte Gruppen vor, können die Reaktivfarbstoffe auch nachträglich metallisiert werden.

Die wichtigsten Verfahrensvarianten sind in den Ausführungsbeispielen dargestellt.

Im folgenden sollen mögliche Ausgangsstoffe, die zur Herstellung der Reaktivfarbstoffe der Formel (1) verwendet werden können, einzeln genannt werden.

Diazokomponenten der Formel (6)
1-Amino-4-β-methyl-vinylsulfonylbenzol,
1-Amino-4-allylsulfonylbenzol.

Weitere Diazokomponenten

Aminobenzol, 1-Amino-2-, -3- oder -4-methylbenzol, 1-Amino-2-, -3- oder -4-methoxybenzol, 1-Amino-2-, -3- oder -4-chlorbenzol, 1-Amino-2,5-dichlorbenzol, 1-Amino-2,5-dimethylbenzol, 1-Amino-3-methyl-6-methoxybenzol, 1-Amino-2-methoxy-4-nitrobenzol, 1-Aminobiphenyl, 1-Aminobenzol-2-, -3- oder -4-carbonsäure, 2-Aminodiphenyläther, 1-Aminobenzol-2-, -3- oder -4- sulfonsäureamid, 1-Aminobenzol-2-, -3- oder -4-sulfonsäure, 1-Aminobenzol-2,4 und -2,5-disulfonsäure, 1-Amino-4-methylbenzol-2-sulfonsäure, 1-Amino-3-methylbenzol-6-sulfonsäure, 1-Amino-6-methylbenzol-3- oder -4-sulfonsäure, 1-Aminonaphthalin, 2-Aminonaphthalin, 1-Aminonaphthalin-2-, -4-, -5-, -6-, -7- oder -8-sulfonsäure, 2-Aminonaphthalin-1-, -3-, -4-, -5-, -6-, -7- oder -8-sulfonsäure, 1-Aminonaphthalin-3,6- oder -5,7-disulfonsäure, 2-Aminonaphthalin-1,5-, -1,7-, -3,6-, -5,7-, -4,8- oder -6,8-disulfonsäure, 1-Aminonaphthalin-2,5,7-trisulfonsäure, 2-Aminonaphthalin-1,5,7-, -3,6,8- oder -4,6,8-trisulfonsäure, 4-Aminoazobenzol-3,4′-disulfonsäure, 3-Methoxy-4-amino-6-methylazobenzol-2′,4′-disulfonsäure oder 3-Methoxy-4-amino-6-methylazobenzol-2′,5′-disulfonsäure.

Kupplungskomponenten

Phenol, 1-Hydroxy-3- oder -4-methylbenzol, 1-Hydroxybenzol-4-sulfonsäure 1-Hydroxynaphthalin, 2-Hydroxynaphthalin, 2-Hydroxynaphthalin-6-oder -7-sulfonsäure, 2-Hydroxynaphthalin-3,6- oder -6,8-disulfonsäure, 1-Hydroxynaphthalin-4-sulfonsäure, 1-Hydroxynaphthalin-4,6- oder -4,7- disulfonsäure, 1-Amino-3-methylbenzol, 1-Amino-2-methoxy-5-methylbenzol, 1-Amino-2,5-dimethylbenzol, 3-Aminophenylharnstoff, 1-Amino-3-acetylaminobenzol, 1-Amino-3-hydroxyacetylaminobenzol, 1,3-Diaminobenzol-4-sulfonsäure, 1-Aminonaphthalin-6- oder -8-sulfonsäure, 1-Amino-2-methoxy-naphthalin-6-sulfonsäure, 2-Aminonaphthalin-5,7-disulfonsäure, 1-Amino-8-hydroxynaphthalin-4-sulfonsäure, 1-Amino-8-hydroxynaphthalin-6-sulfonsäure, 1-Amino-8-hydroxynaphthalin-2,4-disulfonsäure, 2-Hydroxy-3-aminonaphthalin-5,7-disulfonsäure, 1-Amino-8-hydroxynaphthalin-2,4,6-trisulfonsäure, 1-Hydroxy-8-acetylaminonaphthalin-3-sulfonsäure, 1-Benzoylamino-8-hydroxynaphthalin-3,6- oder -4,6-disulfonsäure, 2-Benzoylamino-5-hydroxynaphthalin-7-sulfonsäure, 2-Amino-5-hydroxynaphthalin-7-sulfonsäure, 2-Methyl- bzw- 2-Aethylamino-5-hydroxynaphthalin-7-sulfonsäure, 2-(N-Acetyl-N-methylamino)-5-hydroxynaphthalin-7-sulfonsäure, 2-Acetylamino-5-hydroxynaphthalin-7-sulfonsäure, 2-Amino-5-hydroxynaphthalin-1,7-disulfonsäure, 2-Amino-8-hydroxynaphthalin-6-sulfonsäure, 2-Methyl- bzw. -Aethylamino-8-hydroxynaphthalin-6-sulfonsäure, 2-(N-Acetyl-N-methylamino)-8-hydroxynaphthalin-6-sulfonsäure, 2-Acetylamino-8-hydroxynaphthalin-6-sulfonsäure, 2-Amino-8-hydroxynaphthalin-3,6-disulfonsäure, 2-Acetylamino-8-hydroxynaphthalin-3,6-disulfonsäure, 1-Amino-5-hydroxynaphthalin-7-sulfonsäure, 1-Amino-8-hydroxynaphthalin-3,6- bzw. -4,6-disulfonsäure, 1-Acetylamino-8-hydroxynaphthalin-3,6- bzw. -4,6-disulfonsäure, 1-(4′-Aminobenzoylamino)-8-hydroxynaphthalin-3,6- bzw. -4,6-disulfonsäure, 1-(4′-Nitrobenzoylamino)-8-hydroxynaphthalin-3,6- bzw. -4,6-disulfonsäure, 1-(3′-Aminobenzoylamino)-8-hydroxynaphthalin-3,6- bzw. -4,6-disulfonsäure, 1-(3′-Nitrobenzoylamino)-8-hydroxynaphthalin-3,6- bzw. -4,6-disulfonsäure, 2-(4′-Amino-3′-sulfophenylamino)-5-hydroxynaphthalin-7-sulfonsäure, 3-Methylpyrazolon-(5), 1-Phenyl-3-methyl-5-pyrazolon, 1-(4′-Sulfophenyl)-3-methyl-5-pyrazolon, 1-(4′-Sulfophenyl)-pyrazolon-(5)-3-carbonsäure, 1-(3′-Aminophenyl)-3-methyl-5-pyrazolon, 1-(2′,5′-Disulfophenyl)-3-methyl-5-pyrazolon, 1-(2′-Methyl-4′-sulfophenyl)-5-pyrazolon-3-carbonsäure, 1-(4',8'-Disulfonaphthyl-[2'])-3-methyl-5-pyrazolon, 1-(5',7'-Disulfonaphthyl-[2'])-3-methyl-5-pyrazolon, 1-(2',5'-Dichlor-4'-sulfophenyl)-3-methyl-5-pyrazolon, 3-Aminocarbonyl-4-methyl-6-hydroxypyridon-(2), 1-Aethyl-3-cyan- oder -3-chlor-4-methyl-6-hydroxypyridon-(2), 1-Aethyl-3-3-sulfomethyl-4-methyl-6-hydroxypyridon-(2), 2,4,6-Triamino-3-cyanpyridin, 2-(3'-Sulfophenylamino)-4,6-diamino-3-cyanpyridin, 2-(2'-Hydroxyäthylamino)-3-cyan-4-methyl-6-aminopyridin, 2,6-Bis-(2'-hydroxyäthylamino)-3-cyan-4-methylpyridin, 1-Aethyl-3-carbamoyl-4-methyl-6-hydroxypyridon-(2), 1-Aethyl-3-sulfomethyl-4-methyl-5-carbamoyl-6-hydroxypyridon-(2), N-Acetoacetylaminobenzol, 1-(N-Acetoacetylamino)-2-methoxybenzol-5-sulfonsäure, 4-Hydroxychinolon-(2), 1-Amino-8-hydroxy-2-(phenylazo)-naphthalin-3,6-disulfonsäure, 1-Amino-8-hydroxy-2-(4'-sulfophenylazo)-naphthalin-3,6-disulfonsäure, 1-Amino-8-hydroxy-2-(2',5'-disulfophenylazo)-naphthalin-3,6-disulfonsäure, 1-β-Aminoäthyl-3-cyan-4-methyl-6-hydroxypyridon-(2), 1-γ-Aminopropyl-3-sulfomethyl-4-methyl-6-hydroxypyridon-(2), 1,3-Diaminobenzol, 1-Amino-3-N,N-di-β-hydroxyäthylaminobenzol, 1-Amino-3-N,N-di-β-sulfatoäthylaminobenzol, 1-Amino-3-N,N-di-β-hydroxyäthylamino-4-methoxybenzol, 1-Amino-3-N,N-di-β-sulfato-äthylamino-4-methoxybenzol, 1-Amino-3-sulfo-benzylamino-benzol, 1-Amino-3-sulfo-benzylamino-4-chlorbenzol, 1-Amino-3-N,N-di-sulfo-benzylaminobenzol.

Die Diazotierung der Diazokomponenten bzw. der eine diazotierbare Aminogruppe enthaltenden Zwischenprodukte erfolgt in der Regel durch Einwirkung salpetriger Säure in wässrig-mineralsaurer Lösung bei tiefer Temperatur. Die Kupplung auf die Kupplungskomponente erfolgt bei stark sauren, neutralen bis schwach alkalischen pH-Werten.

Die Reaktivfarbstoffe der Formel (1) sind faserreaktiv. Unter faserreaktiven Verbindungen sind solche zu verstehen, die mit den Hydroxygruppen der Cellulose oder mit den Aminogruppen von natürlichen oder synthetischen Polyamiden unter Bildung kovalenter chemischer Bindungen zu reagieren vermögen.

Die Reaktivfarbstoffe der Formel (1) eignen sich zum Färben und Bedrucken der verschiedensten Materialien, wie Seide, Leder, Wolle, Polyamidfasern und Polyurethanen, und insbesondere cellulosehaltiger Fasermaterialien aller Art. Solche Fasermaterialien sind beispielsweise die natürliche Cellulosefaser, wie Baumwolle, Leinen und Hanf, sowie Zellstoff und regenerierte Cellulose. Die Reaktivfarbstoffe der Formel (1) sind auch zum Färben oder Bedrucken von hydroxylgruppenhaltigen Fasern geeignet, die in Mischgeweben enthalten sind. z. B. von Gemischen aus Baumwolle mit Polyesterfasern oder Polyamidfasern.

Die erfindungsgemässen Farbstoffe lassen sich auf verschiedene Weise auf das Fasermaterial applizieren und auf der Faser fixieren, insbesondere in Form von wässrigen Farbstofflösungen und -druckpasten. Sie eignen sich sowohl für das Ausziehverfahren als auch zum Färben nach dem Foulardfärbeverfahren, wonach die Ware mit wässrigen, gegebenenfalls salzhaltigen Farbstofflösungen imprägniert wird, und die Farbstoffe nach einer Alkalibehandlung oder in Gegenwart von Alkali, gegebenenfalls unter Wärmeeinwirkung fixiert werden. Besonders geeignet sind sie für das sogenannte Kaltverweilverfahren, wonach der Farbstoff zusammen mit dem Alkali auf dem Foulard aufgebracht wird und danach durch mehrstündiges Lagern bei Raumtemperatur fixiert wird. Nach dem Fixieren werden die Färbungen oder Drucke mit kaltem und heissem Wasser, gegebenenfalls unter Zusatz eines dispergierend wirkenden und die Diffusion der nicht fixierten Anteile fördernden Mittels gründlich gespült.

Die Reaktivfarbstoffe der Formel (1) zeichnen sich durch hohe Reaktivität und gutes Fixiervermögen aus. Sie können daher nach dem Ausziehfärbeverfahren bei niedrigen Färbetemperaturen eingesetzt werden und erfordern beim Pad-Steam-Verfahren nur kurze Dämpfzeiten. Die Fixiergrade sind hoch, und die nicht fixierten Anteile können leicht ausgewaschen werden, wobei die Differenz zwischen Ausziehgrad und Fixiergrad bemerkenswert klein, d. h. der Seifverlust sehr gering ist. Die Reaktivfarbstoffe der Formel (1) eignen sich auch besonders zum Druck, vor allem auf Baumwolle, ebenso aber auch zum Bedrucken von stickstoffhaltigen Fasern, z. B. von Wolle, Seide oder Wolle enthaltenden Mischgeweben.

Die mit den erfindungsgemässen Farbstoffen hergestellten Färbungen und Drucke auf Cellulosefasermaterialien besitzen eine hohe Farbstärke und eine hohe Faser-Farbstoff-Bindungsstabilität, sowohl in saurem als auch in alkalischem Bereich, weiterhin eine gute Lichtechtheit und sehr gute Nassechtheitseigenschaften, wie Wasch-, Wasser-, Seewasser-, Ueberfärbe- und Schweissechtheiten, sowie eine gute Plissierechtheit, Bügelechtheit und Reibechtheit.

In der EP-A-0 031 099 sind Farbstoffe beschrieben, welche einen Chlortriazin- oder Chlorpyrimidin-Reaktivrest und einen Alkenylsulfonylrest, worin das Alkenyl mindestens 3 C-Atome aufweist, enthalten.

Die nachfolgenden Beispiele dienen zur Erläuterung der Erfindung. Die Temperaturen sind in Celsiusgraden angegeben, Teile sind Gewichtsteile, die Prozentangaben beziehen sich auf Gewichtsprozente, sofern nicht anders vermerkt. Gewichtsteile stehen zu Volumenteilen im Verhältnis von Kilogramm zu Liter.

Die Herstellung der Monoazo- oder Disazozwischenverbindung ist in den nachfolgenden Ausführungsbeispielen nicht in allen Fällen beschrieben, sie ergibt sich jedoch ohne weiteres aus der allgemeinen Beschreibung.

Beispiel 1

Die salzsauer diazotierte Lösung von 19,7 Teilen p-Aminophenyl-β-methylvinylsulfon wird bei 0 bis 5 °C und pH = 5 bis 6 zu einer Lösung von 28,4 Teilen 1-(2'-Sulfophenyl)-3-carboxy-5-pyrazolon gegeben

und gekuppelt. Der gelbe Monoazofarbstoff wird isoliert, er entspricht der Formel

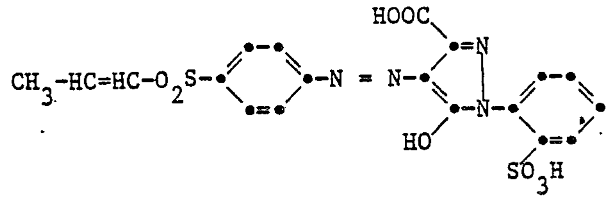

Beispiel 2

Die salzsauer diazotierte Lösung von 19,7 Teilen 4-Allylsulfonylanilin wird bei 0 bis 5 °C und pH = 5 bis 6 zu einer Lösung von 29,8 Teilen 1-(2'-Methyl-4'-sulfophenyl)-3-carboxy-5-pyrazolon gegeben und gekuppelt. Der gelbe Monoazofarbstoff wird isoliert, er entspricht der Formel

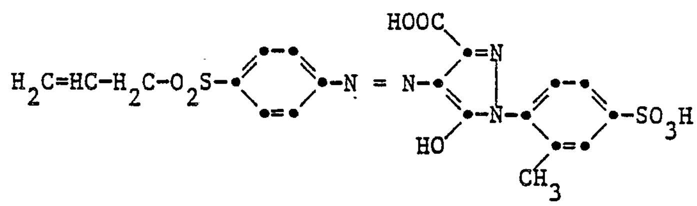

Beispiel 3

Die salzsauer diazotierte Lösung von 19,7 Teilen p-Aminophenyl-β-methylvinylsulfon wird bei 0 bis 5 °C und pH = 5 bis 6 zu einer Lösung von 38,4 Teilen 1-(4',8'-Disulfonaphthyl)-3-methyl-5-pyrazolon gegeben und gekuppelt. Der gelbe Monoazofarbstoff wird isoliert, er entspricht der Formel

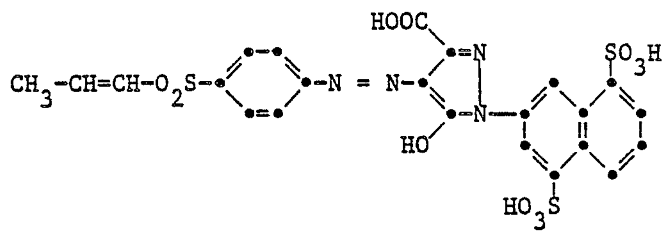

Beispiel 4

Die salzsauer diazotierte Lösung von 19,7 Teilen 4-Allylsulfonylanilin wird bei 0 bis 5 °C und pH = 5 bis 7 zu einer Lösung von 29 Teilen 1-Aethyl-3-aminocarbonyl-4-methyl-5-sulfomethyl-6-hydroxy-pyridon-2-gegeben und gekuppelt. Der gelbe Monoazofarbstoff wird isoliert, er entspricht der Formel

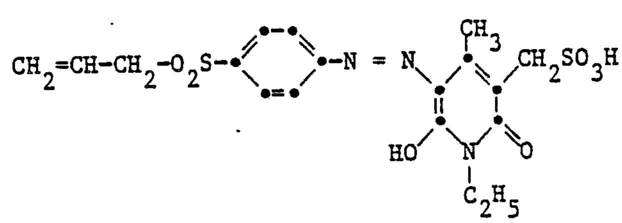

Beispiel 5

Zu einer salzsauern diazotierten Lösung von 39,4 Teilen 4-Allylsulfonylanilin werden 600 Teile einer neutralen Lösung von 56,2 Teilen 2-Acetylamino-5-naphthol-7-sulfonsäure in 400 Teilen Eis-/Wasser-Mischung getropft und bei pH 6 bis 7 gekuppelt. Der Farbstoff wird mit Kochsalz abgeschieden. Das Pressgut wird durch Zerstäubungstrocknung getrocknet. Man erhält ein oranges Pulver, das Baumwolle in tiefen Orangetönen färbt :

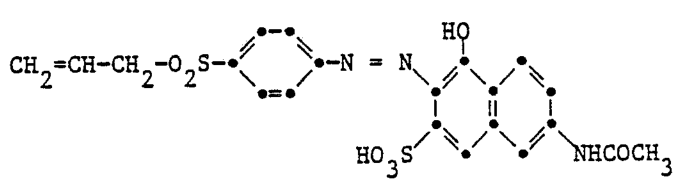

Beispiel 6

Zu einer salzsauer diazotierten Lösung von 101,5 Teilen 4-Allylsulfonylanilin werden 1200 Teile einer neutralen Lösung von 160 Teilen 1-Amino-8-hydroxynaphthalin-3,6-disulfonsäure in 1000 Teilen Eis-/Wasser-Mischung getropft und über Nacht bei pH 1 gekuppelt. Zu dem dunkelroten Monoazofarbstoff wird die salzsauer diazotierte Suspension aus 101,5 Teilen 4-Allylsulfonylanilin gegeben und mit Soba bei pH = 6 bis 7 gekuppelt.

Es wird klärfiltriert und der Farbstoff mit Kochsalz abgeschieden. Das Pressgut wird durch Zerstäubungstrocknung getrocknet. Man erhält ein schwarzes Pulver, das Baumwolle in tiefen Marineblautönen färbt :

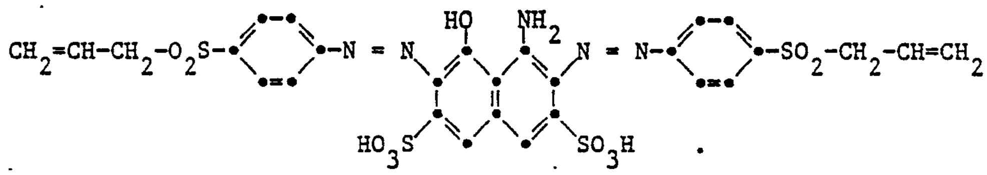

Analog zu den beschriebenen Methoden lassen sich auch die in der folgenden Tabelle aufgeführten Farbstoffe herstellen, die Baumwolle im angegebenen Farbton färben.

| Beispiele | Farbton |
|---|---|
| 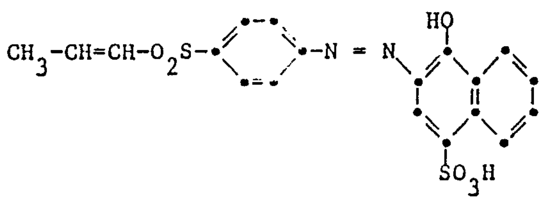 | scharlach |
| 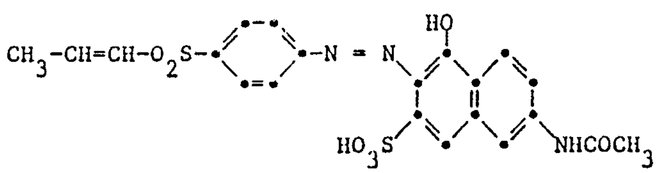 | orange |
| 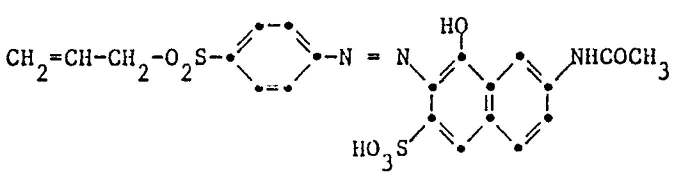 | scharlach |
| 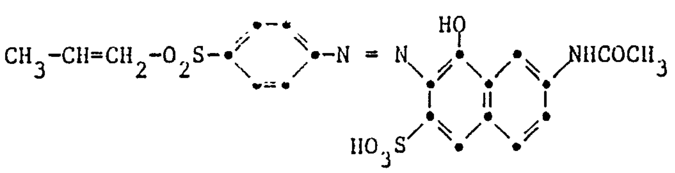 | scharlach |

(Siehe Fortsetzung Seite 12 ff.)

(Fortsetzung)

| Beispiele | Farbton |
|---|---|
| 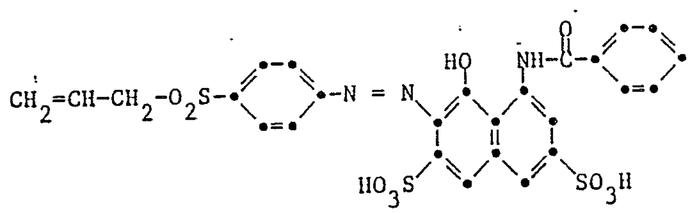 | gelbstichig rot |
| 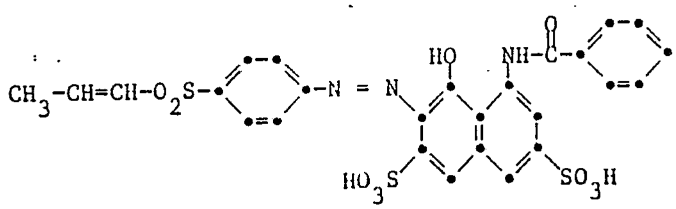 | gelbstichig rot |
| 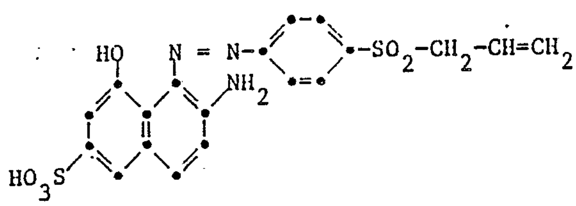 | rot |
| 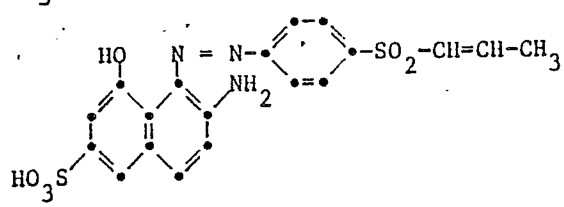 | rot |
| 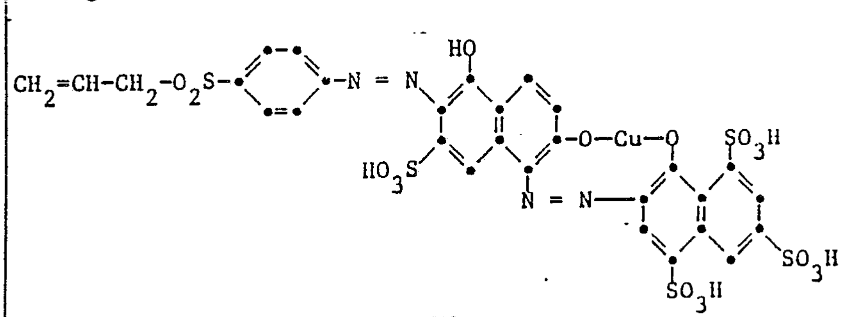 | marineblau |
| 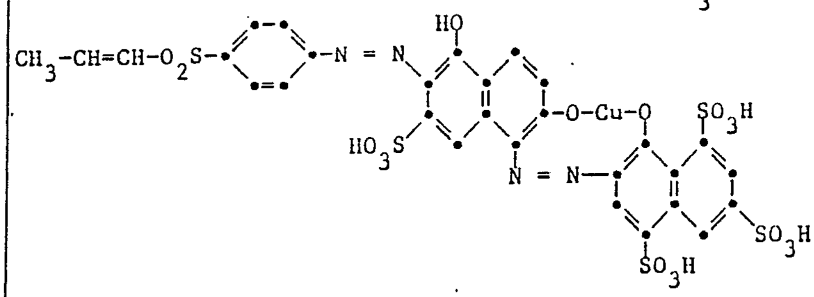 | marineblau |
| 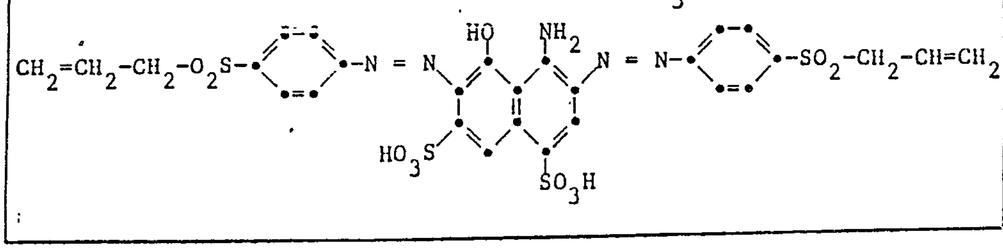 | marineblau |

(Fortsetzung)

| Beispiele | Farbton |
| --- | --- |
| 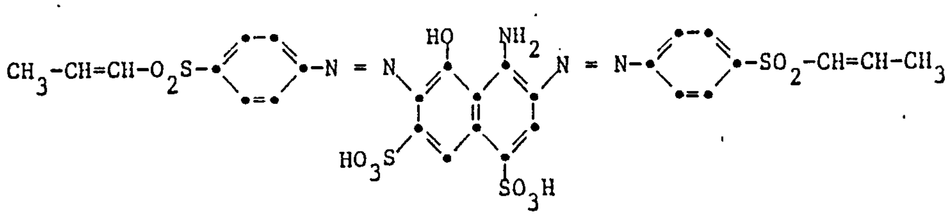 | marineblau |
| 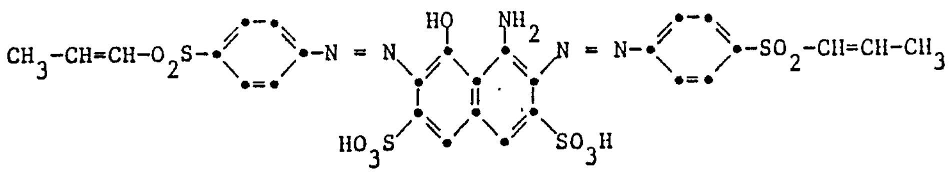 | marineblau |

### Farbevorschrift I

2 Teile des gemäss Beispiel 1 erhaltenen Farbstoffes werden in 400 Teilen Wasser gelöst ; dazu gibt man 1 500 Teile einer Lösung, die pro Liter 53 g Natriumchlorid enthält. In dieses Färbebad geht man bei 40 °C mit 100 Teilen eines Baumwollgewebes ein. Nach 45 Minuten werden 100 Teile einer Lösung, die pro Liter 16 g Natriumhydroxyd und 20 g kalziniertes Soda enthält, zugegeben. Die Temperatur des Färbebades wird weitere 45 Minuten bei 40 °C gehalten. Danach wird die gefärbte Ware gespült, während einer Viertelstunde mit einem nichtionogenen Waschmittel kochend geseift, nochmals gespült und getrocknet.

### Färbevorschrift II

2 Teile des gemäss Beispiel 1 erhaltenen Reaktivfarbstoffes werden in 400 Teilen Wasser gelöst ; dazu gibt man 1 500 Teile einer Lösung, die pro Liter 53 g Natriumchlorid enthält. In dieses Färbebad geht man bei 35 °C mit 100 Teilen eines Baumwollgewebes ein. Nach 20 Minuten werden 100 Teile einer Lösung, die pro Liter 16 g Natriumhydroxyd und 20 g kalziniertes Soda enthält, zugegeben. Die Temperatur des Färbebades wird weitere 15 Minuten bei 35 °C gehalten. Danach wird die Temperatur innerhalb von 20 Minuten auf 60 °C erhöht. Die Temperatur wird weitere 35 Minuten bei 60 °C gehalten. Danach wird gespült, während einer Viertelstunde mit einem nichtionogenen Waschmittel kochend geseift, nochmals gespült und getrocknet.

### Färbevorschrift III

8 Teile des gemäss Beispiel 1 erhaltenen Reaktivfarbstoffes werden in 400 Teilen Wasser gelöst ; dazu gibt man 1 400 Teile einer Lösung, die pro Liter 100 g Natriumsulfat enthält. In dieses Färbebad geht man bei 25 °C mit 100 Teilen eines Baumwollgewebes ein. Nach 10 Minuten werden 200 Teile einer Lösung, die pro Liter 150 g Trinatriumphosphat enthält, zugegeben. Danach wird die Temperatur des Färbebades innerhalb 10 Minuten auf 60 °C erhöht. Die Temperatur wird weitere 90 Minuten auf 60 °C gehalten. Danach wird gespült, während einer Viertelstunde mit einem nichtionogenen Waschmittel kochend geseift, nochmals gespült und getrocknet.

### Färbevorschrift IV

4 Teile des gemäss Beispiel 1 erhaltenen Reaktivfarbstoffes werden in 50 Teilen Wasser gelöst. Dazu gibt man 50 Teile einer Lösung, die pro Liter 5 g Natriumhydroxyd und 20 g kalziniertes Soda enthält. Mit der erhaltenen Lösung wird ein Baumwollgewebe foulardiert, so dass es um 70 % seines Gewichtes zunimmt, und dann auf eine Kaule aufgewickelt. Das Baumwollgewebe wird so während 3 Stunden bei Raumtemperatur gelagert. Danach wird die gefärbte Ware gespült, während einer Viertelstunde mit

einem nichtionogenen Waschmittel kochend geseift, nochmals gespült und getrocknet.

Färbevorschrift V

6 Teile des gemäss Beispiel 1 erhaltenen Reaktivfarbstoffes werden in 50 Teilen Wasser gelöst. Dazu gibt man 50 Teile einer Lösung, die pro Liter 16 g Natriumhydroxyd und 0,04 Liter Wasserglas (38 °Bé) enthält. Mit der erhaltenen Lösung wird ein Baumwollgewebe foulardiert, so dass es um 70 % seines Gewichtes zunimmt, und dann auf eine Kaulge aufgewickelt. Das Baumwollgewebe wird so während 10 Stunden bei Raumtemperatur gelargert. Danach wird die gefärbte Ware gespült, während einer Viertelstunde mit einem nichtionogenen Waschmittel kochend geseift, nochmals gespült und getrocknet.

Färbevorschrift VI

2 Teile des gemäss Beispiel 1 erhaltenen Reaktivfarbstoffes werden unter Zusatz von 0,5 Teilen m-nitrobenzolsulfonsaurem Natrium in 100 Teilen Wasser gelöst. Mit der erhaltenen Lösung wird ein Baumwollgewebe imprägniert, so dass es um 75 % seines Gewichtes zunimmt, und dann getrocknet. Dann imprägniert man das Gewebe mit einer 20 °C warmen Lösung, die pro Liter 4 g Natriumhydroxyd und 300 g Natriumchlorid enthält, quetscht auf 75 % Gewichtszunahme ab, dämpft die Färbung während 30 Sekunden bei 100 bis 102 °C, spült, seift während einer Viertelstunde in einer 0,3 %igen kochenden Lösung eines nichtionogenen Waschmittels, spült und trocknet.

Durckvorschrift I

3 Teile des gemäss Beispiel 1 erhaltenen Reaktivfarbstoffes werden unter schnellem Rühren in 100 Teile einer Stammverdickung, enthaltend 50 Teile 5 %ige Natriumalginatverdickung, 27,8 Teile Wasser, 20 Teile Harnstoff, 1 Teil m-nitrobenzolsulfonsaures Natrium sowie 1,2 Teile Natriumhydrogencarbonat, eingestreut. Mit der so erhaltenen Druckpaste bedruckt man ein Baumwollgewebe, trocknet und dämpft den erhaltenen bedruckten Stoff 2 Minuten bei 102 °C in gesättigtem Dampf. Das bedruckte Gewebe wird dann gespült, gegebenenfalls kochend geseift und nochmals gespült, und anschliessend getrocknet.

Druckvorschrift II

5 Teile des gemäss Beispiel 1 erhaltenen Reaktivfarbstoffes werden unter schnellem Rühren in 100 Teile einer Stammverdickung, enthaltend 50 Teile 5 %ige Natriumalginatverdickung, 36,5 Teile Wasser, 10 Teile Harnstoff, 1 Teil m-nitrobenzolsulfonsaures Natrium sowie 2,5 Teile Natriumhydrogencarbonat, eingestreut. Mit der so erhaltenen Druckpaste, deren Stabilität den technischen Anforderungen entspricht, bedruckt man ein Baumwollgewebe, trocknet und dämpft den erhaltenen bedruckten Stoff 8 Minuten bei 102 °C in gesättigtem Dampf. Das bedruckte Gewebe wird dann gespült, gegebenenfalls kochend geseift und nochmals gespült, und anschliessend getrocknet.

**Patentansprüche**

1. Reaktivfarbstoffe der Formel

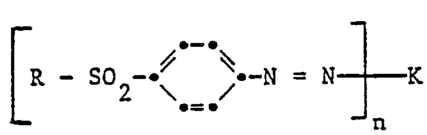

(1)

worin R ein Rest $—CH=CH—CH_3$ oder $—CH_2—CH=CH_2$, K der Rest einer Kupplungskomponente der Benzol- oder Naphthalinreihe oder der heterocyclischen Reihe, der durch Alkylgruppen mit 1 bis 4 Kohlenstoffatomen, β-Amino-äthyl, γ-Aminopropyl, Alkoxygruppen mit 1 bis 4 Kohlenstoffatomen, Acylaminogruppen mit 1 bis 8 Kohlenstoffatomen, Aminobenzoylamino, Nitrobenzoylamino, Amino, Alkylamino mit 1 bis 4 Kohlenstoffatomen, N,N-Diäthylamino, Phenylamino, Amino-sulfophenylamino, β-Hydroxyäthylamino, N,N-Di-(β-hydroxyäthyl)-amino, N,N-Di-(β-sulfatoäthyl)-amino, N-Acetyl-N-methylamino, Hydroxyacetylamino, Sulfobenzylamino, N,N-Di-sulfobenzylamino, Phenyl, Phenoxy, Alkoxycarbonyl mit 1 bis 4 Kohlenstoffatomen im Alkoxyrest, Alkylsulfonyl mit 1 bis 4 Kohlenstoffatomen, Phenylsulfonyloxy, Trifluormethyl, Nitro, Cyano, Halogen, Carbamoyl, N-Alkylcarbamoyl mit 1 bis 4 Kohlenstoffatomen im Alkylrest, Sulfamoyl, N-Alkylsulfamoyl mit 1 bis 4 Kohlenstoffatomen, N-(β-Chloräthyl)-sulfamoyl, N-(β-Hydroxyäthyl)-sulfamoyl, N,N-Di-(β-Hydroxyäthyl)-sulfamoyl, N-Phenylsulfamoyl, Ureido, Hydroxy, Carboxy, Sulfomethyl oder Sulfo substituiert sein kann ; und n = 1 oder 2 ist.

2. Reaktivfarbstoffe gemäss Anspruch 1, der Formel

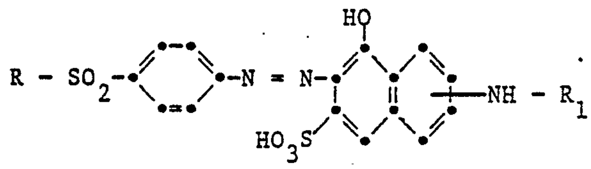 (2)

worin $R_1$ Wasserstoff, $C_{1-4}$-Alkyl oder $C_{1-4}$-Alkanoyl ist, und R die in Anspruch 1 angegebene Bedeutung hat.

3. Reaktivfarbstoffe gemäss Anspruch 2, worin $R_1$ Acetyl ist.

4. Reaktivfarbstoffe gemäss Anspruch 1, der Formel

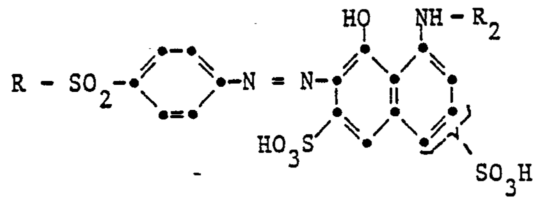 (3)

worin $R_2$ Wasserstoff, $C_{1-4}$-Alkanoyl oder Benzoyl ist, und R die in Anspruch 1 angegebene Bedeutung hat.

5. Reaktivfarbstoffe gemäss Anspruch 4, worin $R_2$ Benzoyl ist.

6. Reaktivfarbstoffe gemäss Anspruch 1, der Formel

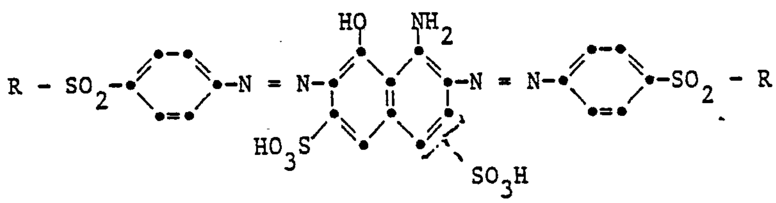 (4)

worin R die in Anspruch 1 angegebene Bedeutung hat.

7. Reaktivfarbstoffe gemäss Anspruch 6, der Formel

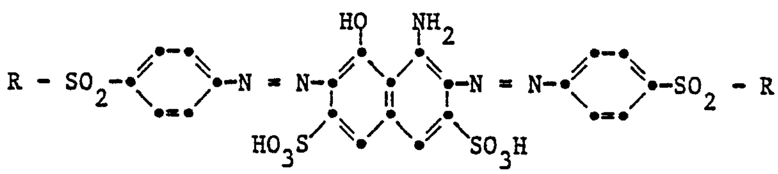 (5)

worin R die für Anspruch 6 geltende Bedeutung hat.

8. Verfahren zur Herstellung von Reaktivfarbstoffen gemäss Anspruch 1, dadurch gekennzeichnet, dass man Diazokomponenten der Formel

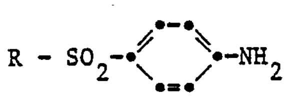 (6)

und Kupplungskomponenten der Formel

H—K (7)

durch Diazotierung und Kupplung im gewünschten molaren Verhältnis zu Reaktivfarbstoffen der Formel (1) umsetzt.

9. Verwendung der Reaktivfarbstoffe gemäss Anspruch 1, zum Färben oder Bedrucken von cellulosehaltigen Fasermaterialien.

10. Verwendung gemäss Anspruch 9, zum Färben oder Bedrucken von Baumwolle.

**Claims**

1. A reactive dye of the formula

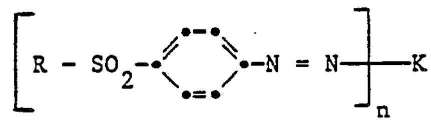

(1)

in which R is a $-CH=CH-CH_3$ or $-CH_2-CH=CH_2$ radical, K is the radical of a coupling component of the benzene or naphthalene series or of the heterocyclic series, which can be substituted by alkyl groups having 1 to 4 carbon atoms, β-aminoethyl, γ-aminopropyl, alkoxy groups having 1 to 4 carbon atoms, acylamino groups having 1 to 8 carbon atoms, aminobenzoylamino, nitrobenzoylamino, amino, alkylamino having 1 to 4 carbon atoms, N,N-diethylamino, phenylamino, aminosulfophenylamino, β-hydroxyethylamino, N,N-di-(β-hydroxyethyl)-amino, N,N-di-(β-sulfatoethyl)-amino, N-acetyl-N-methylamino, hydroxyacetylamino, sulfobenzylamino, N,N-di-sulfobenzylamino, phenyl, phenoxy, alkoxy-carbonyl having 1 to 4 carbon atoms in the alkoxy radical, alkylsulfonyl having 1 to 4 carbon atoms, phenylsulfonyloxy, trifluoromethyl, nitro, cyano, halogen, carbamoyl, N-alkylcarbamoyl having 1 to 4 carbon atoms in the alkyl radical, sulfamoyl, N-alkylsulfamoyl having 1 to 4 carbon atoms, N-(β-chloroethyl)-sulfamoyl, N-(β-hydroxyethyl)-sulfamoyl, N,N-di-(β-hydroxyethyl)-sulfamoyl, N-phenylsulfamoyl, ureido, hydroxyl, carboxyl, sulfomethyl or sulfo, and n is 1 or 2.

2. A reactive dye according to claim 1 of the formula

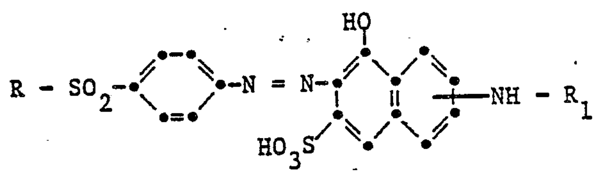

(2)

in which $R_1$ is hydrogen, $C_{1-4}$-alkyl or $C_{1-4}$-alkanoyl, and R is as defined in claim 1.

3. A reactive dye according to claim 2 in which $R_1$ is acetyl.

4. A reactive dye according to claim 1 of the formula

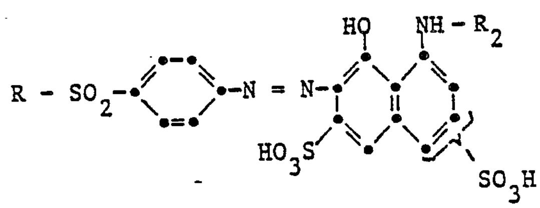

(3)

in which $R_2$ is hydrogen, $C_{1-4}$-alkanoyl or benzoyl, and R is as defined in claim 1.

5. A reactive dye according to claim 4 in which $R_2$ is benzoyl.

6. A reactive dye according to claim 1 of the formula

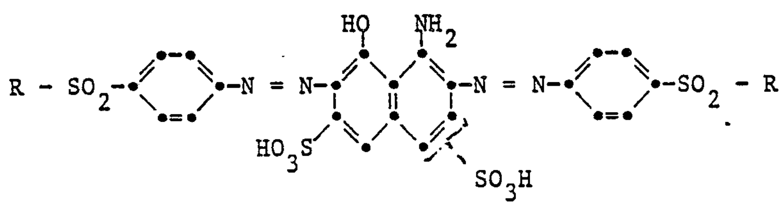

(4)

in which R is as defined in claim 1.

7. A reactive dye according to claim 6 of the formula

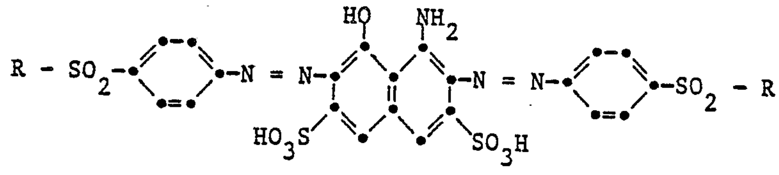

(5)

in which R is as defined in claim 6.

8. A process for preparing a reactive dye according to claim 1, which comprises converting a diazo component of the formula

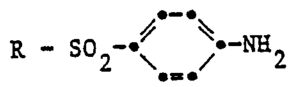 (6)

and a coupling component of the formula

$$H—K \quad (7)$$

by diazotisation and coupling in the desired molar ratio into a reactive dye of the formula (1).

9. Use of a reactive dye according to claim 1, for dyeing or printing cellulose-containing fibre materials.

10. Use according to claim 9, for dyeing or printing cotton.

**Revendications**

1. Colorants réactifs de formule

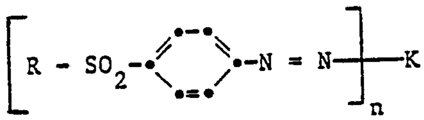 (1)

dans laquelle R est un reste $—CH=CH—CH_3$ ou $—CH_2—CH=CH_2$, K est le reste d'un composant de copulation de la série du benzène ou de celle du naphtalène ou de la série hétérocyclique, qui peut être substitué par des atomes d'halogène ou par des groupes alkyle ayant de 1 à 4 atomes de carbone, β-aminoéthyle, δ-aminopropyle, des groupes alcoxy ayant de 1 à 4 atomes de carbone, des groupes acylamino ayant de 1 à 8 atomes de carbone, aminobenzoylamino, nitrobenzoylamino, amino, alkylamino ayant de 1 à 4 atomes de carbone, N,N-diéthylamino, phénylamino, amino-sulfophénylamino, β-hydroxyéthylamino, N,N-di-(β-hydroxyéthyl)-amino, N,N-di-(β-sulfatoéthyl)-amino, N-acétyl-N-méthylamino, hydroxyacétylamino, sulfobenzylamino, N,N-disulfobenzylamino, phényle, phénoxy, alcoxycarbonyle ayant de 1 à 4 atomes de carbone dans le radical alcoxy, alkylsulfonyle ayant de 1 à 4 atomes de carbone, phénylsulfonyloxy, trifluorométhyle, nitro, cyano, carbamyle, N-alkylcarbamyle ayant de 1 à 4 atomes de carbone dans le radical alkyle, sulfamyle, N-alkylsulfamyle ayant de 1 à 4 atomes de carbone, N-(β-chloréthyl)-sulfamyle, N-(β-hydroxyéthyl)-sulfamyle, N,N-di-(β-hydroxyéthyl)-sulfamyle, N-phénylsulfamyle, uréido, hydroxyle, carboxyle, sulfométhyle ou sulfo ; et n = 1 ou 2.

2. Colorants réactifs selon la revendication 1, de formule

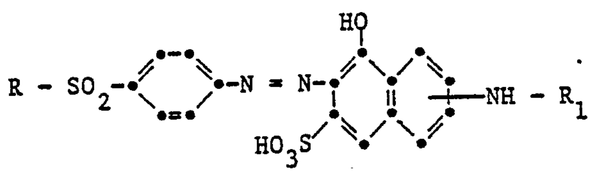 (2)

dans laquelle $R_1$ est un atome d'hydrogène ou un groupe alkyle en $C_1$-$C_4$ ou alcanoyle en $C_1$-$C_4$ et R a la signification donnée dans la revendication 1.

3. Colorants réactifs selon la revendication 2, dans lesquels $R_1$ est le groupe acétyle.

4. Colorants réactifs selon la revendication 1, de formule

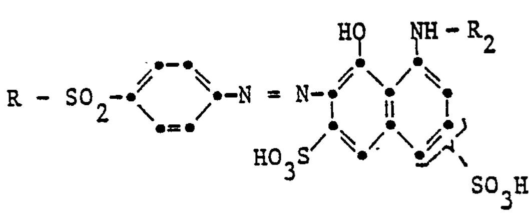 (3)

dans laquelle $R_2$ est un atome d'hydrogène ou un groupe alcanoyle en $C_1$-$C_4$ ou benzoyle, et R a la signification donnée dans la revendication 1.

5. Colorants réactifs selon la revendication 4, dans lesquels $R_2$ est le groupe benzoyle.

6. Colorants réactifs selon la revendication 1, de formule

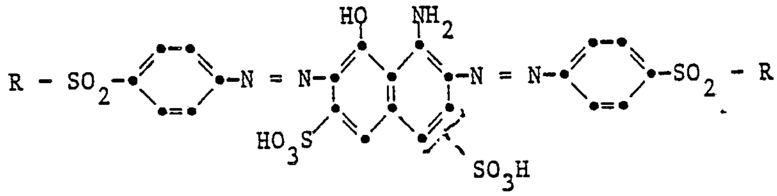

(4)

dans laquelle R a la signification donnée dans la revendication 1.

7. Colorants réactifs selon la revendication 6, de formule

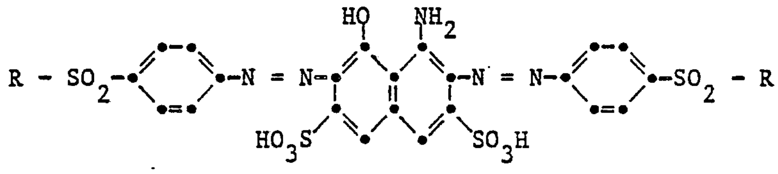

(5)

dans laquelle R a la signification valable pour la signification 6.

8. Procédé pour la préparation de colorants réactifs selon la revendication 1, caractérisé par le fait que l'on fait réagir des composants diazo de formule

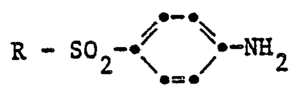

(6)

et des composants de copulation de formule

H—K (7)

par diazotation et copulation dans le rapport molaire désiré, pour aboutir aux colorants réactifs de formule (1).

9. Utilisation des colorants réactifs selon la revendication 1, pour la teinture ou l'impression de matériaux fibreux cellulosiques.

10. Utilisation selon la revendication 9, pour la teinture ou l'impression du coton.